# EUROPÄISCHE PATENTANMELDUNG

(11) **EP 0 754 728 A1**
(43) Veröffentlichungstag der Anmeldung: **22.01.1997**
(21) Anmeldenummer: 96109817.5
(22) Anmeldetag: 19.06.1996
(51) Int. Cl.: C08L 63/00, C08K 5/5357

(54) **Flammwidrige Epoxidharz-Formmassen**

(30) Priorität: 14.07.1995 DE 19525714; 01.06.1996 DE 19622125
(71) Anmelder: HOECHST AKTIENGESELLSCHAFT, 65926 Frankfurt am Main (DE)
(72) Erfinder: Hörold, Sebastian, Dr., 50374 Erftstadt (DE); Jenewein, Elke, Dipl.-Ing., 86368 Gersthofen (DE)

(57) **Zusammenfassung**

Die Erfindung betrifft flammwidrige Epoxidharz-Formmassen, die als Flammschutzsystem mindestens einen cyclischen Phosphonsäureester enthalten und ihre Verwendung.

## Beschreibung

Die Erfindung betrifft flammwidrige Epoxidharz-Formmassen, ein Verfahren zu ihrer Herstellung und ihre Verwendung.

Epoxidharze werden heute zur Herstellung von Formmassen und Beschichtungen mit hoher Beanspruchung im thermischen, mechanischen und elektronischen Bereich eingesetzt. Sie sind geeignet zum Verguß von elektrischen bzw. elektronischen Bauteilen und für Tränk- und Imprägnierprozesse. In der Elektrotechnik werden die verwendeten Epoxidharz-Formmassen überwiegend flammwidrig ausgerüstet.

Epoxidharz-Formmassen werden im allgemeinen mit bromhaltigen aromatischen Verbindungen, insbesondere Tetrabrombisphenol A, flammwidrig ausgerüstet. Werden ausschließlich bromierte Flammschutzmittel eingesetzt, so wird ein Bromgehalt von etwa 20 Gew.-% benötigt, um ein Selbstverlöschen der Formmassen zu gewährleisten. Als Synergist wird häufig Antimontrioxid verwendet. Im Brandfall wird Bromwasserstoff freigesetzt, was zu Schäden durch Korrosion führen kann. Unter ungünstigen Bedingungen können auch polybromierte Dibenzodioxine und Furane entstehen.

Es besteht daher ein Bedarf an Epoxidharz-Formmassen, die die geforderte Flammwidrigkeit bereits ohne Zusatz bromierter Verbindungen erreichen bzw. bei denen der Bromgehalt stark reduziert ist.

Zur flammwidrigen Ausrüstung von Epoxidharz-Formmassen wurden Füllstoffe mit Löschwirkung wie Aluminiumoxidhydrat (DE-A-35 40 524) vorgeschlagen. Auch durch den Zusatz von Ammoniumpolyphosphat, gegebenenfalls in Kombination mit Aluminiumoxidhydrat, kann eine hinreichende Flammwidrigkeit erreicht werden. Anstelle von Ammoniumpolyphosphat kann roter Phosphor verwendet werden (DE-A-17 45 796).

Nachteilig bei allen als Füllstoff vorliegenden Flammschutzmitteln ist, daß keine Transparenz der Materialien erhalten wird. Es wurden bereits zahlreiche flüssige phosphororganische Verbindungen als flammhemmende Kunststoffzusätze vorgeschlagen. Nachteilig bei diesen Systemen ist aber der ausgeprägte "Weichmachereffekt" dieser Zusätze. Bei geharteten Epoxidharzen äußert sich der weichmachende Effekt in einer starken Herabsetzung der Glasübergangstemperatur.

Die Glasübergangstemperatur ist die Temperatur, bei der Polymere vom hartelastischen (glasartigen) Zustand in den gummielastischen Zustand übergehen. Die Glasübergangstemperatur gibt eine Aussage über die Warmeformbeständigkeit des Polymeren und damit über den Temperaturbereich, in dem die Polymeren einsetzbar sind. Amingehärtete Epoxidharze zeigen Glasübergangstemperaturen von etwa 70 °C. Durch den Zusatz flüssiger Additive kann die Glasübergangstemperatur bis unterhalb Raumtemperatur absinken, so daß solche Polymere nicht mehr einsetzbar sind.

Die flammwidrige Ausstattung von Epoxidharzen mit epoxidfunktionellen Phosphonsäureestern wurde ebenfalls beschrieben (EP-A-0 384 939). Nachteilig bei diesen Systemen ist der hohe Syntheseaufwand derartiger Phosphonsäureester.

Es ist Aufgabe der vorliegenden Erfindung, flammwidrige Epoxidharz-Formmassen zur Verfügung zu stellen, die bereits ohne den Zusatz halogenhaltiger Komponenten einen ausreichenden Flammschutz gewährleisten, leicht herstellbar sind und die Transparenz zeigen.

Gegenstand der Erfindung sind daher flammwidrige Epoxidharz-Formmassen, die als Flammschutzsystem mindestens einen cyclischen Phosphonsäureester der allgemeinen Formel I und/oder II 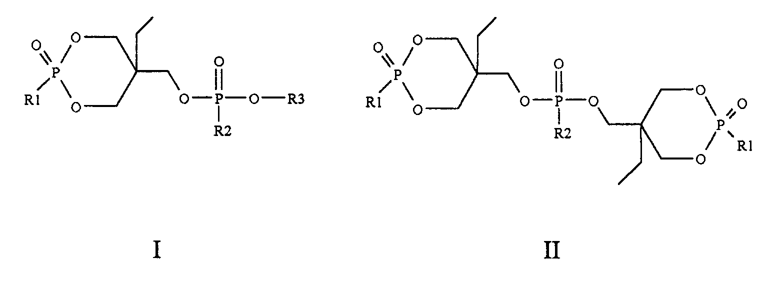 enthalten, worin R1, R2 und R3 unabhängig voneinander eine Alkyl-, Aryl- oder Alkylarylgruppe mit 1 bis 12 Kohlenstoffatomen bedeuten.

Die eingesetzten Phosphonsäureester zeichnen sich durch gute thermische Beständigkeit, geringe Flüchtigkeit, physiologische Unbedenklichkeit und einen hohen Phosphorgehalt aus.

Die erfindungsgemäß eingesetzten cyclischen Phosphonsäureester sind bekannt (DE-A-22 55 971). Ihre Herstellung kann durch Umesterung von Phosphorigsäuretriestern mit Polyalkoholen und anschließende Umsetzung der cyclischen oder bicyclischen Phosphite mit Phosphonsäurediestern erfolgen. Die cyclischen Phosphonsäurester können darüber hinaus auch durch Umesterung von linearen Phosphonsäureestern mit Polyalkoholen wie Pentaerythrit, Neopentylglycol oder Trismethylolpropan, hergestellt werden.

Es wurde nun wider Erwarten gefunden, daß sich derartige cyclische Phosphonsäureester nach Formel I und/oder II mit Epoxidharzen mischen lassen und derartige Mischungen eine hervorragende Lagerstabilität aufweisen. Die Mischungen zeigen keine Sedimentation und keine Veränderung des Epoxidwertes. Diese Mischungen können gegebenenfalls mit Lösemitteln verdünnt werden sind daher technisch sehr gut einsetzbar, beispielsweise zur Herstellung von Laminaten.

Die flammwidrigen Epoxidharz-Formmassen sind weiterhin dadurch gekennzeichnet, daß sie die cyclischen Phosphonsäureester in 5-50 Masseteilen je 100 Masseteilen Epoxidharz-Formmasse enthalten.

Besonders bevorzugt enthalten die flammwidrigen Epoxidharz-Formmassen 10-30 Masseteile cyclische Phosphonsäureester je 100 Masseteile Epoxidharz-Formmasse.

Bevorzugt enthalten die flammwidrigen Epoxidharz-Formmassen 1-10 Gew.-% Phosphor, bezogen auf das Gesamtgewicht der Epoxidharz-Formmasse.

Besonders bevorzugt enthalten die flammwidrigen Epoxidharz-Formmassen 2-6 Gew.-% Phosphor.

Bevorzugt bedeuten die Reste R1, R2 und R3 in den Formeln I und II jeweils eine Methylgruppe.

Bevorzugt enthalten die erfindungsgemäßen flammwidrigen Epoxidharz-Formmassen mindestens ein weiteres Flammschutzmittel.

Bevorzugt handelt es sich dabei um ein bromhaltiges weiteres Flammschutzmittel.

Bei dem bromhaltigen Flammschutzmittel handelt es sich bevorzugt um Tetrabrombisphenol A.

In einer weiteren Ausführungsform der Erfindung enthalten die flammwidrigen Epoxidharz-Formmassen 5-20 Masseteile cyclische Phosphonsäureester und 2-15 Masseteile Tetrabrombisphenol A je 100 Masseteile Epoxidharz-Formmasse.

Bevorzugt zeigen die flammwidrigen Epoxidharz-Formmassen Transparenz.

Bevorzugt sind die flammwidrigen Epoxidharz-Formmassen durch Glasfasern verstärkt. Anstelle von Glasfasern können auch Glasgewebe verwendet werden, ebenfalls ist die Ausrüstung mit Füllstoffen wie Quarzmehl oder Aluminiumoxidhydrat möglich.

Die erfindungsgemäßen flammwidrigen Epoxidhard-Formmassen entsprechen der Brandgüteklasse V-0 nach UL-94 (Vertikaltest).

Die Erfindung betrifft ebenfalls ein Verfahren zur Herstellung der erfindungsgemäßen flammwidrigen Epoxidharz-Formmassen, dadurch gekennzeichnet, daß in einem ersten Verfahrensschritt eine Mischung aus Epoxidharz und mindestens einem cyclischen Phosphonsäureester nach Formel I und/oder II hergestellt wird und diese in einem zweiten Verfahrensschritt durch Zugabe eines Härters in die Epoxidharz-Formmasse überführt wird.

Bevorzugt wird beim ersten Verfahrensschritt ein Lösemittel zugesetzt.

Die Erfindung betrifft ebenfalls die Verwendung der vorgenannten flammwidrigen Epoxidharz-Formmassen zur Herstellung von Formkörpern, Laminaten oder Beschichtungen.

Es wurde nun überraschenderweise gefunden, daß durch die Zugabe des Flammschutzmittels die Glasübergangstemperatur des gehärteten Epoxidharzes nur wenig beeinflußt wird.

Nach der Härtung der Epoxidharz-Phosphonsäureester-Mischung wird eine transparente Epoxidharz-Formmasse erhalten.

Unter den oben genannten Epoxidharz-Formmassen sollen Verbindungen verstanden werden, die durch Polyadditionsreaktion aus einer Epoxidkomponente und einer Vernetzungskomponente (Härter) hergestellt werden können. Die Epoxidkomponente kann auch durch Zusatz geeigneter Katalysatoren mit sich selbst vernetzen.

Als Epoxidkomponente eignen sich insbesondere folgende Verbindungen: Aromatische Polyglycidylether wie Bisphenol A-bisglycidylether, Bisphenol F-bisglycidylether und Bisphenol S-bisglycidylether, Polyglycidylether von Phenol/Formaldehyd- und Kresol/Formaldehyd-Harzen, Diglycidylether von Phthal-, Tetrahydrophthal-, Isophthal- und Terephthalsäure, Triglycidylisocyanurat, Hydantoin-Epoxidharze. Das mittlere Molekulargewicht der Polyepoxidverbindung beträgt im allgemeinen 150 bis 4000.

Die Vernetzung (Härtung) kann mit Polyaminen wie Triethylentetramin, Polyamidoaminen, mehrbasigen Säuren bzw. deren Anhydriden, z. B. Phtalsäureanhydrid oder Hexahydrophtalsäureanhydrid, durchgeführt werden. Gegebenenfalls können Beschleuniger wie z. B. Benzyldimethylamin (BDMA) bei der Härtungsreaktion zugesetzt werden. Die Härtung kann auch katalytisch erfolgen, z. B. mit Dicyandiamid.

Die erfindungsgemäße Einarbeitung des Flammschutzmittels kann in der Art erfolgen, daß die Phosphorverbindung gegebenenfalls unter Erwarmung mit der Epoxidkomponente vermischt wird und das System nach Zusatz von Härter bzw. Katalysator bei 0-200 °C gehartet wird. Es werden farblose, transparente Epoxidharz-Formmassen erhalten.

Die Herstellung der flammgeschützten Epoxidharz-Formmassen kann auch mit Hilfe von Lösemitteln erfolgen. Die dafür verwendeten Lösemittel sind vorzugsweise polar, beispielsweise Ketone wie Aceton oder Methylethylketon, Ether wie Diethylether, THF, Dioxan und andere polare Lösemittel wie Dimethylformamid oder N-Methylpyrrolidon.

Die erhaltene Mischung kann auch zum Imprägnieren von anorganischen oder organischen Verstärkungsmaterialien in der Form von Fasern, Vliesen oder Geweben verwendet werden.

Die Prüfung des Brandverhaltens wurde nach der Vorschrift von Underwriters Laboratories "Test for Flammability of Plastic Materials - UL 94" in der Fassung vom 02.05.1975 an Prüfkörpern von 127 mm Länge, 12,7 mm Breite und verschiedener Dicke durchgeführt. Der Sauerstoffindex wurde in einer Apparatur nach ASTM-D 2863-74 bestimmt.

Überraschenderweise konnte durch die alleinige Zugabe der oben beschriebenen, cyclischen Phosphonsäureester als Flammschutzmittel eine V-0 Einstufung des Brandverhaltens der Epoxidharz-Formmassen nach dem UL-94 Test erreicht werden. Die erforderliche Menge an Flammschutzmittel ist verhältnismäßig gering und hängt von der Dicke der Probenkörper ab.

Als weitere Flammschutzmittel sind Melamin und Aluminiumoxidhydrat geeignet.

Die Transparenzmessung erfolgt in einem Photometer (Typ: ELKO 2, Fa. Carl Zeiss, Filter Nr. S 49 E 68, S 51 E 67, S 59 E 67, S 72 E 68, S 75 E 68). Gemessen wurde die Lichtdurchlässigkeit der gehärteten Epoadharze (0,8 mm Materialstärke) mit und ohne Flammschutzmittel bei Wellenlängen von 490-750 nm.

Die erfindungsgemäßen Epoxidharz-Formmassen können zur Oberflächenbeschichtung verwendet werden. Sie können für den Verguß elektrischer Bauteile, für Laminate sowie für Klebstoffe verwendet werden.

In den Beispielen wurden die folgenden Produkte eingesetzt:

### Hostaflam OP 910 (Hoechst AG, Frankfurt/Main)

Es handelt sich um eine farblose, hochviskose (Viskosität 440.000 Pa*s bei 20 °C, 25 Pa*s bei 60 °C) Flüssigkeit. Der Phosphorgehalt beträgt 21 Gew.-%, die Säurezahl (mg KOH/g) liegt unter 10. Hostaflam OP 910 weist eine gute thermische Beständigkeit auf (2 % Gewichtsverlust bei 250 °C, 45 % Gewichtsverlust bei 350 °C).
Hostaflam OP 910 ist eine Mischung der cyclischen Phosphonsäurester nach Formel I bzw. II

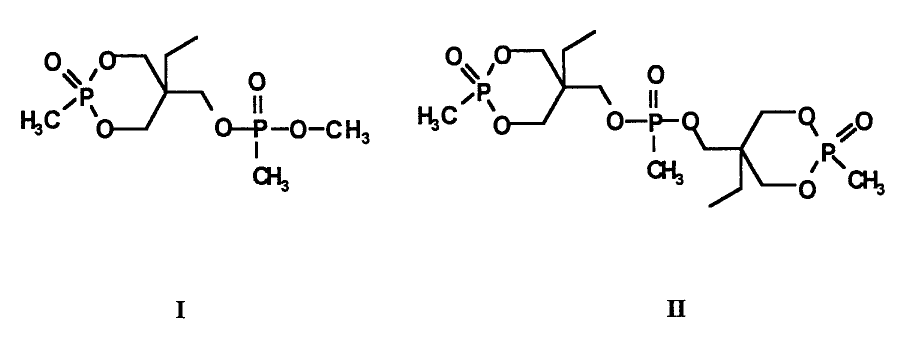

### Beckopox EP 140 (Hoechst AG, Frankfurt/Main)

Niedrigmolekulares Kondensationsprodukt aus Bisphenol A und Epichlorhydrin mit einer Viskosität von 8-11 Pa*s (25 °C), einer Dichte von 1,16 g/ml (25 °C) und einem Epoxid-Äquivalentgewicht von 180 bis 192.

### Beckopox EP 116 (Hoechst AG, Frankfurt/Main)

Niedrigmolekulares Kondensationsprodukt aus Bisphenol A/Bisphenol F und Epichlorhydrin mit einer Viskosität von 6-8 Pa*s (25 °C), einer Dichte von 1,16 g/ml (25 °C) und einem Epoxid-Äquivalentgewicht von 175 bis 185.

### Beckopox Spezialhärter EH 625 (Hoechst AG, Frankfurt/Main)

Modifiziertes aliphatisches Amin mit einem H-Aktiväquivalentgewicht von 73 und einer Viskosität von 0,8-1,2 Pa*s (25 °C).

### Beispiel 1 (Vergleichsprobe ohne Flammschutzmittel)

Bei Raumtemperatur werden 100 g Beckopox EP 140 und 39,4 g Spezialhärter EH 625 vermischt. Die Gießharzmasse wird in einen Rahmen gegossen und in einer Presse kalt ausgehärtet. Es werden 1,6 und 3,2 mm dicke Platten hergestellt, die anschließend in Streifen gesägt und dem Brandtest unterzogen werden.

### Beispiel 2 (Vergleichsprobe ohne Flammschutzmittel)

Analog Beispiel 1 werden 100 g Beckopox EP 140, 80 g Hexahydrophtalsäureanhydrid und 2 g Benzyldimethylamin als Beschleuniger bei etwa 50 °C vermischt und während 3 h bei 100 °C ausgehärtet.

### Beispiele 3-6 (bei Raumtemperatur gehärtete Harze)

Hostaflam OP 910 wird auf etwa 80 °C vorgewärmt und in entsprechenden Anteilen zu 100 Teilen Beckopox EP 140 zugemischt (Tabelle 1). Nach Zugabe von 39,4 g Spezialhärter EH 625 wird bei Raumtemperatur gehärtet.

### Beispiele 7-8 (Heißhärtung)

Hostaflam OP 910 wird auf 80 °C erwärmet und in entsprechenden Anteilen zu 100 g Beckopox EP 140, 80 g Hexahydrophthalsäureanhydrid und 2 g Benzyldimethylamin zugemischt (Tabelle 2). Die Härtung erfolgt während 3 h bei 100 °C.

### Beispiele 9-10 (Kombination mit anderen Flammschutzmitteln)

Hostaflam OP 910 wird auf etwa 80 °C vorgewärmt und in entsprechenden Anteilen zu 100 Teilen eines Epoxidharzes mit den in Tabelle 3 angebenen Teilen Tetrabrombisphenol A (TBBA) zugemischt. Nach Zugabe von 39,4 g Spezialhärter EH 625 wird bei Raumtemperatur gehärtet.

### Ergebnisse:

1. Kaltgehärtete Epoxidharz-Formmassen
(Harz EP 140, Härter EH 625)

**Tabelle 1**

| Beispiel Nr. | Dicke des Prüfkörpers | Hostaflam OP 910 T/100 T EP-Harz | UL-94 Test | Sauerstoffindex |
|---|---|---|---|---|
| 1 | 1,6 mm | - | n. k. | 0,19 |
| 3 | " | 40 | n. k. | 0,26 |
| 4 | " | 50 | V-0 | 0,26 |
| 5* | " | 50 | V-0 | 0,27 |
| 6 | 3,2 mm | 25 | V-0 | 0,26 |

| | | | | |
|---|---|---|---|---|
| * mit Harz EP 116 | | | | |
| T = Teile n.k. = nicht klassifiziert | | | | |

2. Heißgehärtete Epoxidharz-Formmassen
(Harz EP 140, Härter Hexahydrophthalsäureanhydrid)

**Tabelle 2**

| Beispiel Nr. | Dicke des Prüfkörpers | Hostaflam OP 910 T/100 T EP-Harz | UL-94 Test | Sauerstoffindex |
|---|---|---|---|---|
| 2 | 2,0 mm | - | n. k. | 0,21 |
| 7 | " | 40 | V-0 | 0,26 |
| 8 | " | 50 | V-0 | 0,27 |
| T = Teile n. k. = nicht klassifiziert | | | | |

3. Kombination der Phosphonsäureester mit Tetrabrombisphenol A
(Harz EP 140, Härter EH 625)

**Tabelle 3**

| Beispiel Nr. | Dicke des Prüfkörpers | Hostaflam OP 910 T/100 T EP-Harz | Tetrabrombisphenol A | UL 94 Test | Sauerstoffindex |
|---|---|---|---|---|---|
| 9 | 1,6 mm | - | 50 | V-0 | 0,28 |
| 10 | " | 20 | 10 | V-0 | 0,26 |
| T = Teile | | | | | |

Die erfindungsgemäßen Beispiele 3-8 zeigen, daß durch die Verwendung von 25-50 Teilen Hostaflam OP 910 zu 100 Teilen Epoxidkomponente ein wirksamer Flammschutz erreicht werden kann. Die für den geforderten Flarnmschutz nach UL 94 V-0 notwendigen Mengen an Hostaflam OP 910 hängen von der Dicke der Prüfkörper ab. Bei einer Dicke der Prüfkörper von 1,6 mm sind 50 Teile Hostaflam OP 910 pro 100 Teile Epoxidkomponente erforderlich, um eine V-0 Einstufung zu erreichen, bei einer Dicke der Prüfkörper von 3,2 mm sind es lediglich 25 Teile Hostaflam OP 910 pro 100 Teile Epoxidkomponente. Beispiel 9 ist ein Vergleichsbeispiel und zeigt, daß von dem bisher überwiegend verwendeten Flammschutzmittel Tetrabrombisphenol A mindestens 50 Teile (auf 100 Teile Epoxidharz) eingesetzt werden müssen, um die geforderte Brandschutzanforderung zu bestehen. Durch Kombination von Hostaflam OP 910 mit Tetrabrombisphenol A nach Beispiel 10 kann der insgesamt notwendige Anteil an Flammschutzmittel wesentlich reduziert werden.

Durch die Zugabe von Hostaflam OP 910 wird die thermische Stabilität der gehärteten Epoxidharze nicht beeinträchtigt (Tabelle 4).

Thermische Stabilität (TGA) der Epoxidharz-Formmassen

**Tabelle 4**

| Epoxidharz-Formmasse | 5% Gewichtsverlust bei | 10 % Gewichtsverlust bei |
|---|---|---|
| EP 140 + EH 625 | 255 °C | 280 °C |
| EP 140 + EH 625 mit 50 T Hostaflam OP 910 | 250 °C | 275 °C |
| EP 140 + Hexahydrophthalsäureanhydrid | 310 °C | 325 °C |
| EP 140 + Hexahydrophthalsäureanhydrid + 50 T Hostaflam OP 910 | 280 °C | 305 °C |
| T = Teile | | |

Durch die Zugabe von Hostaflam OP 910 wird die Transparenz der gehärteten Epoxidharze nur wenig verringert (Tabelle 5).

**Tabelle 5**

| Wellenlänge [nm] | Lichtdurchlässigkeit | |
|---|---|---|
| | EP 140 + EH 625 | EP 140 + EH 625 mit 50 T Hostaflam OP 910 |
| 490 | 87 | 80 |
| 510 | 87 | 80 |
| 590 | 88 | 81 |
| 720 | 89 | 81 |
| 750 | 89 | 81 |

## Patentansprüche

1. Flammwidrige Epoxidharz-Formmassen, die als Flammschutzsystem mindestens einen cyclischen Phosphonsäureester der allgemeinen Formel I und/oder II enthalten, 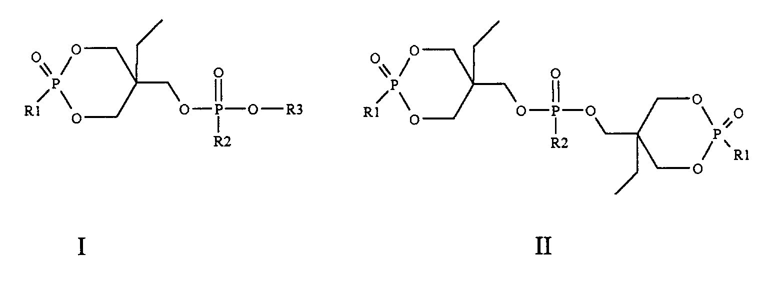 worin R1, R2 und R3 unabhängig voneinander eine Alkyl-, Aryl- oder Alkylarylgruppe mit 1 bis 12 Kohlenstoffatomen bedeuten.

2. Flammwidrige Epoxidharz-Formmassen nach Anspruch 1, dadurch gekennzeichnet, daß sie die cyclischen Phosphonsäureester in 5-60 Masseteilen je 100 Masseteile Epoxidharz-Formmasse enthalten.

3. Flammwidrige Epoxidharz-Formmassen nach Anspruch 2, dadurch gekennzeichnet, daß sie 10-30 Masseteile cyclische Phosphonsäureester je 100 Masseteile Epoxidharz-Formmasse enthalten.

4. Flammwidrige Epoxidharz-Formmassen nach mindestens einem der Ansprüche 1-3, dadurch gekennzeichnet, daß sie 1-10 Gew.-% Phosphor, bezogen auf das Gesamtgewicht der Epoxidharz-Formmasse, enthalten.

5. Flammwidrige Epoxidharz-Formmassen nach Anspruch 4, dadurch gekennzeichnet, daß sie 2-6 Gew.-% Phosphor enthalten.

6. Flammwidrige Epoxidharz-Formmassen nach mindestens einem der Ansprüche 1-5, dadurch gekennzeichnet, daß die Reste R1, R2 und R3 in den Formeln I und II jeweils eine Methylgruppe bedeuten.

7. Flammwidrige Epoxidharz-Formmassen nach mindestens einem der Ansprüche 1-6, dadurch gekennzeichnet, daß sie mindestens ein weiteres Flammschutzmittel enthalten.

8. Flammwidrige Epoxidharz-Formmassen nach Anspruch 7, dadurch gekennzeichnet, daß es sich um ein bromhaltiges weiteres Flammschutzmittel handelt.

9. Flammwidrige Epoxidharz-Formmassen nach Anspruch 8, dadurch gekennzeichnet, daß es sich bei dem bromhaltigen Flammschutzmittel um Tetrabrombisphenol A handelt.

10. Flammwidrige Epoxidharz-Formmassen nach mindestens einem der Ansprüche 7-9, dadurch gekennzeichnet, daß sie 5-20 Masseteile cyclischer Phosphonsäureester und 2-15 Masseteile Tetrabrombisphenol A je 100 Masseteile Epoxidharz-Formmasse enthalten.

11. Flammwidrige Epoxidharz-Formmassen nach mindestens einem der Ansprüche 1-10, dadurch gekennzeichnet, daß sie Transparenz zeigen.

12. Flammwidrige Epoxidharz-Formmassen nach mindestens einem der Ansprüche 1-11, dadurch gekennzeichnet, daß sie durch Glasfasern verstärkt sind.

13. Flammwidrige Epoxidharz-Formmassen nach mindestens einem der Ansprüche 1-12, dadurch gekennzeichnet, daß sie der Brandgüteklasse V-0 nach UL 94 (Vertikaltest) entsprechen.

14. Verfahren zur Herstellung der flammwidrigen Epoxidharz-Formmassen nach mindestens einem der Ansprüche 1 - 13, dadurch gekennzeichnet, daß in einem ersten Verfahrensschritt eine Mischung aus einem Epoxidharz und mindestens einem cyclischen Phosphonsäureester nach Formel I und/oder II hergestellt wird und diese in einem zweiten Verfahrensschritt durch Zugabe eines Härters in die Epoxidharz-Formmasse überführt wird.

15. Verfahren nach Anspruch 14, dadurch gekennzeichnet, daß beim ersten Verfahrensschritt ein Lösungsmittel zugesetzt wird.

16. Verwendung der flammwidrigen Epoxidharz-Formmassen nach mindestens einem der Ansprüche 1-13 oder erhalten nach dem Verfahren gemäß Anspruch 14 oder 15 zur Herstellung von Formkörpern, Laminaten oder Beschichtungen.
